# EUROPEAN PATENT SPECIFICATION

(11) **EP 2 053 780 B1**
(45) Date of publication and mention of the grant of the patent: **08.10.2014**
(21) Application number: 06761596.3
(22) Date of filing: 28.07.2006
(51) Int. Cl.: H04L 12/24, H04L 12/437, H04L 12/40, G06F 11/14, G06F 11/20, H04L 29/08, H04L 29/14

(54) **A DISTRIBUTED MASTER AND STANDBY MANAGING METHOD AND SYSTEM BASED ON THE NETWORK ELEMENT**
VERFAHREN UND SYSTEM FÜR EINEN VERTEILTEN MASTER UND STANDBY-VERWALTUNG AUF DER BASIS DES NETZWERKELEMENTS
STATION PRINCIPALE DISTRIBUÉE ET PROCÉDÉ DE GESTION DE RÉSERVE ET SYSTÈME À BASE D'ÉLÉMENT DE RÉSEAU

(43) Date of publication of application: 29.04.2009
(73) Proprietor: ZTE Corporation, Shenzhen, Guangdong 518057 (CN)
(72) Inventor: JIANG, Xia, Shenzhen, Guangdong 518057 (CN)
(74) Representative: Waddington, Richard
(86) International application number: PCT/CN2006/001882
(87) International publication number: WO 2008/014639

(56) References cited:
- EP-A1- 0 751 464
- WO-A1-02/03211
- WO-A1-2006/025839
- JP-A- 01 175 338
- JP-A- 03 232 397
- US-A- 5 696 895
- US-A1- 2004 034 807
- US-A1- 2005 066 216
- US-A1- 2006 020 854
- US-A1- 2006 092 856
- US-B1- 6 687 222

## Description

### Technical Field

The present invention relates to a master/standby management method for the network management system in the optical communication field, and especially, to a distributed master/standby management method based on network element and a system thereof.

### Background of Related Art

At present, in the network management system of telecommunication field, when a centralized network management system is running, if the network management system works abnormally, this leads to the result that the network management system is faulty, or it has a poor reliability. In order to solve this problem, a master/standby network management solution is applied in the communication industry, that is, two sets of network management system, one master system and one standby system, or one master system and several standby systems, working simultaneously. The master network manager collects the historical data to manage the network elements, and the master/standby network management method is managed based on the network system.

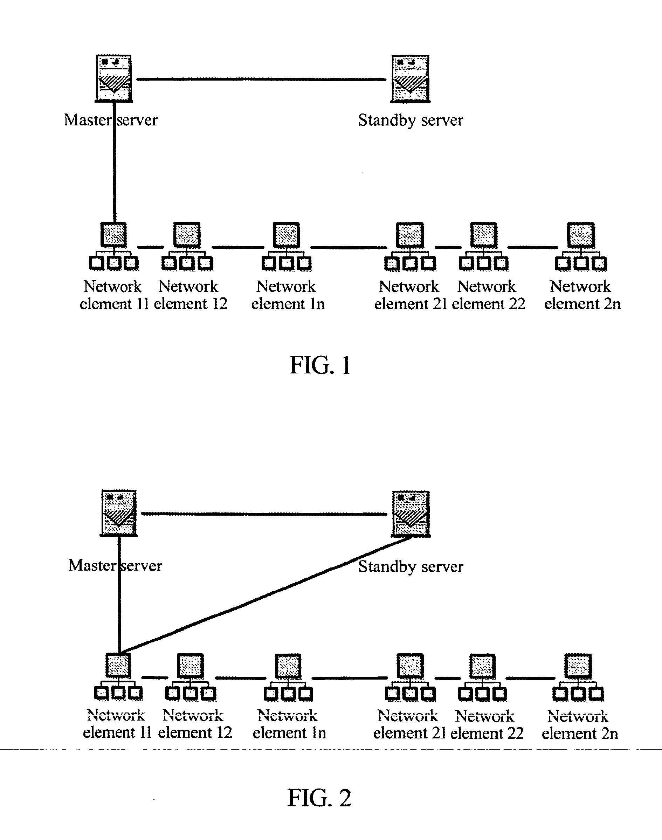

The present master/standby network management method generally has two modes of application:
1) One mode is based on the upper-layer database mirror, that is, the standby network manager completely mirrors the data of the master network manager to make sure that all the data will be saved when the master network manager does not work. Referring to FIG. 1, the master server is used as the master network manager to manage the network elements, while the standby server, as the standby network manager, totally mirrors the data of the master server, thus all the data can be recovered from the standby server when the master server can not work properly.
2) The other mode is the hot network monitoring; since there is a master manager when managing the network elements, one or more standby managers are needed to improve the reliability of the network management, and the data in the master manager should synchronize with those in the standby manager, thus the standby manager can be switched to the master manager to manage the network management system when the master manager does not work. Referring to FIG. 2, the master server is used as the master manager to manage the network elements in the system and the standby server can also monitor the network elements as a standby manager, and the data in the master manager should synchronize with those in the standby manager, thus the standby manager can be switched to be the master manager to manage the network elements when the master manager can not work.

The document US5696895A discloses a fault tolerant multiple network server system in which multiple servers concurrently act as back-up servers for each other even while they are providing their own server services to the system. Rather than having an unused server monitoring for failure of a primary server and taking over control, each acts upon the network, but when its partner should fail, it assumes control of these partner servers storage subsystem. In this way, processing power of both servers is available during normal operation, but they each provide back-up capability for the other.

The document US2005/066216A1 discloses a method and devices for implementing high availability. Some implementations provide high availability for virtual switches of data networks. Each virtual switch acts as a single logical unit, while encompassing at least two physical chassis, referred to herein as a master chassis and a slave chassis. In some preferred embodiments, the active supervisor in the master chassis is configured as an active supervisor of the virtual switch and the active supervisor in the slave chassis is configured as the standby supervisor of the virtual switch.

The document EP0751464A1 discloses a multi-host storage system using the dual port feature of a Fibre Channel to allow multiple computer hosts to simultaneously access a cluster of memory units that are Fibre Channel arbitrated. Typical multiple host access schemes require an expensive Fibre Channel switch and do not allow simultaneous accessing. The dual port feature of Fibre Channel devices provides for fault tolerance and redundancy.

The document WO2006/025839A1 discloses an architecture for a scalable Internet engine that dynamically reassigns server operations in the event of a failure of an ADSS (Active Data Storage System) server. A first and a second ADSS server mirror each other and include corresponding databases with redundant data, domain host control protocol servers, XML interfaces and watchdog timers. The ADSS servers are communicatively coupled to at least one engine operating system and a storage switch; the storage switch being coupled to at least one storage element. The second ADSS server detects, via a heartbeat monitoring algorithm, the failure of the first ADSS server and automatically initiates a failover action to switch over functions to the secondADSS server.

However, the conventional master/standby network management system shown in FIG. 1 and FIG. 2 has the following problems:
1) The master network manager is overloaded. When the system is in operation, the data of all the network elements in the network management system interact with the master manager so as to make the master manager overloaded, thus there has potential safety hazard.
2) In the system, since the master server and the standby server only apply one network element to access and the connection of all network elements is unidirectional, some network elements can not be monitored when the network element ECC (Embedded Control Channel) disconnects. For example, when the ECC between the network element 11 and the network element 12 in FIG. 1 or FIG. 2 disconnects, the master and standby network managers can only manage the network element 11, and the network elements thereafter can not be managed.

Therefore, a master/standby management method is needed to solve the problems that the master network manager is overloaded, the system has poor reliability and some network elements can not be monitored when the ECC disconnects.

### Summary of the Invention

The technical problem to be solved in the present invention is to provide a distributed master/standby management method based on network element and a system thereof to make the master and standby network managers share the load to improve the reliability of the network management.

The distributed master/standby management method based on network element provided by the present invention comprises the following steps of:
(a) connecting all the network elements, configuring the route between the network elements to be bidirectional and configuring the management authorities of server A and server B, wherein some of the network elements configure server A as the master server and server B as the standby server, while the other network elements configure server B as the master server and server A as the standby server;
(b) configuring a returning strategy for the master server in the two servers, interconnecting the two servers, each of which respectively connects to an access network element which configures it as the master server, wherein, the two servers manage their network elements distributed to them respectively as the master server, and monitor the other network elements as standby server;
(c) if the communication between a network element and the server configured by it as the master server is disconnected, said network element performing switching operation, and another server configured by it as standby server working as its master server to manage the network element;
(d) When the communication between the network element and the server configured by it as the original master server is recovered, this server is resumed to be the master server to mange the network element according to the returning strategy.

Advantageously, the above method further comprises the following steps:
In said step (a), connecting all the network elements and configuring the route between the network elements to be bidirectional further comprises:
   serially connecting all the network elements to make the ECCs of all network elements connected;
   configuring the routes of each network element to be bidirectional.

In said step (a), configuring the management authorities of the two servers among the network elements further comprises:
evenly dividing all the network elements into two parts according to the rule of equalized load of the two servers ;
one part of the network elements configuring server A as the master server and B as the standby server;
the other part of the network elements configuring server B as the master server and server A as the standby server.

In said step (b), when the server, as being the master server, manages the network element which configures it as the master server, it collects the historical data of the network element, configures and inquires the network element correspondingly; when the sever, as being the standby server, manages the network element which configures it as the master server, it inquires and monitors the network element.

In said step (b), the data is synchronized between the configured master server and the configured standby server in operation through database synchronization, wherein the historical data in the master server and in the standby server are both whole-amount.

Said step (c) comprises:
When a network element detects that its communication with the server configured by it as the master server is disconnected, it notifies the server configured by it as the standby server to work as its master server to manage this network element;
Or when the server configured by the network element as the standby server detects that the server configured by the network element as the master server is abnormal, said standby server actively asks the network element for the authorities of the master server, and the network element determines whether to switch its standby server to its master server based on the state of its present master server.

The returning strategy in step (b) is configured as the mode of master server returning or the mode of master server non-returning.

If it is the mode of master server returning, in said step (d), when the communication between the network element and the server configured by it as the original master server is recovered, the server configured by it as the original master server is resumed to be the master server to manage said network element, and its present master server state is switched back to be its standby server state, meanwhile the resumed master server synchronizes the data during the disconnection period;

If it is the mode of master server non-returning, in said step (d), when the communication between the network element and the server configured by it as the original master server is recovered, the server configured by it as the original master server is resumed to be the standby server to manage said network element, to synchronize the data during the disconnection period, and to access the network element in the form of the master server when the present master server is disconnected.

In step (b), said two servers, that is, server A and server B, connect to the first network element and the end network element in the serial network elements, respectively.

The present invention also provides a distributed master/standby management system based on network element, comprising a plurality of network elements and server A and server B for managing the network elements, wherein:
All the network elements connect with each other, with bidirectional routes configuration. The management authorities of server A and server B are configured in each network element, wherein some network elements configure server A as the master server and server B as the standby server, while the others configure server A as the standby server and server B as the master server;

When the communication between a network element and the server configured by it as the master server is disconnected, said network element performs switching to make the server configured by it as the standby server be the master server; and when the communication with the server configured by it as the master server recovers, said network element switches the server states back according to the returning strategy;

The two servers connect with each other and are configured with the master server returning strategy, and each server respectively connects to an access network element which configures it as the master server, and in operation, the server, as being the master server, manages the network elements distributed, and as being the standby server, monitors the other part of the network elements;

When the two servers receive the notification of network element switching as the communication is disconnected, the states of the two servers with respect to the network element are switched, and after the communication between the server and the network element which configures it as the master server is recovered, the server resumes the management for the network element according to the returning strategy.

Advantageously, the above system comprises the following features:
When said server, as being the master server, manages the network elements which configured it as the master server, it collects the historical data of the network element and correspondingly configures and inquires said network element; while, as being the standby server, said server manages the network element which configure it as the standby server, inquires and monitors said network element.
When said two servers are configured as the master server and the standby server of the network element to work properly, data are synchronized in the two servers through database synchronization, wherein, the historical data in the master server and the standby server are whole-amount.

The returning strategy for the server being the master server is configured as the mode of master server returning or the mode of master server non-returning.

If it is the master server returning mode, when the communication between the network element and the server configured by it as its original master server is recovered, the server configured by it as its original master server is resumed as the master server to manage the network element, and the present master server state is switched back to be its standby server state, and the data during the disconnection period are synchronized by the resumed master server;

If it is the master server non returning mode, when the communication between the network element and the server configured by it as its original master server is recovered, the server configured by it as its original master server is resumed as its standby server to manage the network element, to synchronize the data during the disconnection, and to access the network element as the master server when the present master server is disconnected;

When the network element detects that its communication with the server configured by it as its master server is disconnected, it notifies the server configured by it as its standby server to work as its master server to manage it; or when the server configured by the network element as its standby server detects that the server configured by the network element as its master server works abnormally, said standby server actively asks the network element for the authority of being the master server, and the network element determines whether to switch its standby server to its master server to manage the network element according to the state of the present master server.

All the network elements are serially connected with each other and connected to the two servers, that is, server A and server B, respectively through the first network element and the end network element.

When each of the two servers working as the master server manages said network elements, and the number of the network elements which configure it as the master server is half of the total number and the two servers manage their network elements according to the rule of equalized load.

Compared with the prior art, two network managers should be both accessed with the network elements and the routes between the network elements are bidirectional in the technical strategy of the present invention; since the technical measurement of the network element based distributed master/standby management is applied, the master and standby network elements share the load and the reliability of the network management is improved. Furthermore, it achieves the load balancing and still has the effectiveness of whole network management when local ECC is disconnected.

### Brief Description of the Drawings

FIG. 1 is a schematic diagram of the typical master/standby management technology based on the upper-layer database mirror;
FIG. 2 is a schematic diagram of the typical master/standby management technology based on the hot monitoring;
FIG. 3 is a schematic diagram of the network element based distributed master/standby management method in accordance with an embodiment of the present invention;
FIG. 4 is an example of server 1 disconnection in the network element based distributed master/standby management method in accordance with the technical scheme of the present invention;
FIG. 5 is an example of network element ECC disconnection in the network element based distributed master/standby management method in accordance with the technical scheme of the present invention.

### Description of the Preferred Embodiments

The present invention will be described-below in further detail with combination of the accompanying figures and the specific embodiments.

Although the present embodiment provides a Dense Wavelength Division Multiplexing System network element based distributed master/standby management method, it can also be used in the network management system in other optical communication networks.

The method is a network element based distributed master/standby management system, which is a dynamic protection mode of the network management; in the method, the two network management servers are equal and are connected with different gateway network elements, and they have corresponding master/standby authorities with respect to different network elements. All the network elements in the system are connected through ECC and are configured with bidirectional routes, each network element can individually configure its master/standby managers (the master/standby servers), while the function and role of the managers are the same, that is, one server can be the master server for one network element and be the standby server for another network element.

In a normal case, both the master and standby network management servers will manage the network elements. By reasonably assigning the number of network elements managed by the two network management servers working as the master servers, load balancing can be achieved; when the master network management server works properly, the network management standby server corresponding to the network element is only in monitoring condition and can not configure the network element. When the network is abnormal or the master network management server works improperly, or the ECC of the network element is disconnected, the standby server of the corresponding network element will take the place of its master server and have all the management functions of the master network management server to continually manage part of the network or the whole network.

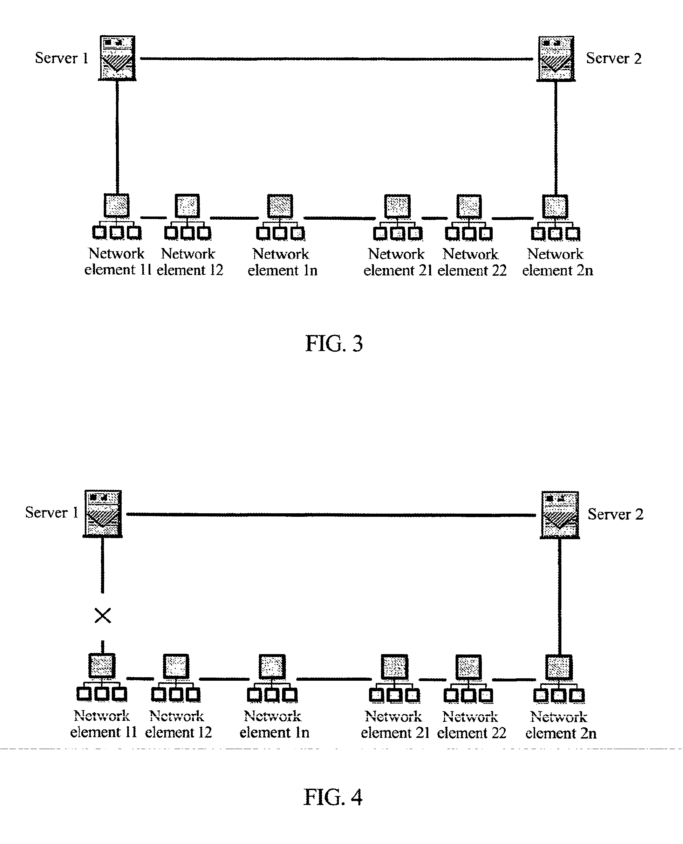

Referring to FIG. 3, the network element based distributed master/standby management method in accordance with the present embodiment may include the following steps:
The first step: connecting all the network elements, configuring the routes between the network elements to be bidirectional, and configuring the management authorities of server A and server B, wherein part of the network elements configure server A as the master server and server B as the standby server, while the other part of the network elements configure server B as the master server and server A as the standby server.

Firstly, all network elements are serially connected, meanwhile, the routes between the network elements are configured to ensure that the routes are bidirectional, thus when one route is not through in one direction, it will switch to the opposite direction.

According to the practical operation, the number of network elements managed by the two network management servers working as the master servers should be well planned, for example, server 1 is assigned to the network element 11-1n as the master server, while server 2 is assigned to the network element 21-2n as the master server. Since only the master network manager collects the historical data for its network elements and the amount of the historical data in the network management of the wavelength division system is relatively large, the load of the two network managers should be as balanced as possible in normal operation.

Then, corresponding authorities of the related managers are configured for each network element, for example, configuring server 1 as network element 11-1n's master server and server 2 as its standby server; while configuring server 2 as network element 21-2n's master server and server 1 as its standby server.

The second step: the master server returning strategy is configured in both servers, and each of which is connected to an access network element which configures it as the master server, in operation, each of the servers, as being the master server, manages the distributed network elements respectively, and, as being the standby server, monitors the other network elements.

Firstly, the returning strategy when the master server does not work should be configured in the two servers, and the strategy includes:
The mode of master server returning, in which the original master server will immediately become the corresponding master server after it recovers;

The mode of master server non-returning, in which the original master server will be the standby server after it is recovered, and then become the master server when the network element asks it to be.

Then, server 1 and server 2 are connected, and server 1 is accessed through network element 11 and works as the master server of network element 11-1n; server 2 is accessed through network element 2n and works as the master server of network element 21-2n, as shown in FIG. 3, the two servers can be accessed to any other network element which configures it as the master server.

In the network management system shown in FIG. 3, server 1 is the master network manager of the network element 11...1n, while the related server 2 is the standby network manager of them; meanwhile, server 2 is the master network manager of network element 21...2n, while server 1 is the standby network manager of them. The ECCs (Embedded Control Channel) of these network elements are interconnected.

In normal operation, the master server manages its corresponding network elements, collects the historical data of the network elements and performs the corresponding configuration and inquiry for the network elements; while the standby server can only query and monitor the network elements and can not perform configuration and collect their historical data; database synchronization is performed between the master network manager and the standby network manager to ensure that the data in the master network manager and the standby network manager are consistent and the historical data are whole-amount.

In different communication systems, the management authorities of the master network manager and the standby network manager may be different according to different requirements of the specific systems, but the standby server must have the ability of monitoring the network elements.

The third step: if the communication between a network element and the server configured by it as its master server is disconnected, said network element switches another server configured by it as its original standby server to be its master server to manage it.

In normal operation, the condition of the communication between the network element and its master server should be monitored:
When the network element detects that it has no response for the heartbeat package of the network manager, the network element will select its present standby network manager to be its master server and send notification to the corresponding standby network manager to ask it to work as its master server with all authorities of the master server according to the configured management authorities;

Or when a server detects that the other server is abnormal, it will actively ask the network element for the master server authorities, and according to the condition of the present master network manager, the network element determines whether to give its standby server the corresponding master server authorities.

The fourth step: When the communication between the network element and the server configured by it as its master server is recovered, the server is resumed to be used as the master server to manage the network element according to the returning strategy.

When the communication between the network element and its original master server is recovered, the network element is managed according to the pre-configured returning strategy, and the data in its original master server needs to be synchronized with those in its original standby server which is the present master server.

If the configured returning strategy is the mode of master server returning, when the servers are linked with the network element, if the network element detects that its master server works normally, it notifies its original standby server to switch back to be its standby server; meanwhile, the master server synchronizes the data during the disconnection period; or when the original standby server detects that the master server works properly, the master server and the standby server switch back to their previous positions and their data are synchronized.

If the configured returning strategy is the mode of master server non-returning, when its original master server is recovered, it is firstly resumed to work as the standby server to manage the network element, synchronizes its data during the disconnection period with the original standby server which is the present master server, and re-accesses in the form of master server to manage the network element when the present master server is disconnected.

Said steps are substantially the same as those of the hot monitoring in technical implementation.

### Example 1: the condition that the connection between a network element and server 1 is invalid.

FIG. 4 illustrates the system when the connection between a network element and server 1 is invalid. According to the technical scheme of the master/standby management method of the present invention, the master/standby management mainly includes the following steps when the connection between server 1 and the network element is interrupted:
(1) Connecting the network elements 11...1n...21...2n, and configuring bidirectional routes for the above network elements, configuring the authorities of server 1 and server 2 of the network elements, and configuring the master server returning strategy as the mode of master server returning.
   Wherein, network elements 11-1n configure server 1 as the master server and server 2 as the standby server, while network elements 21-2n configure server 2 as the master server and server 1 as the standby server.
(2) Accessing server 1 and server 2 to the network elements, and in normal operation, server 1 works as the master server and server 2 works as the standby server to manage network elements 11...1n; server 2 works as the master server and server 1 works as the standby server to manage network elements 21...2n; data are synchronized between server 1 and server 2 to ensure that the data in the two servers are consistent and whole-amount.
(3) As shown in FIG. 4, when the communication between server 1 and network element 11 is invalid and the communication mechanism of network elements 11...1n detects that they are disconnected with server 1, network elements 11...1n will notify server 2 which works as the standby server to switch to be their master server, now server 2 works as the master server to manage all the network elements in the network and collects all the historical data, and server 1 does not manage any network element.
(4) When the communication between server 1 and network element 11 is recovered, since the returning strategy configured in the network element is the mode of master server returning, server 1 is switched to be the master server of the network elements 11...1n, and server 2 is switched back to be the standby server of the network elements 11...1n, wherein, in the process of switching, the data in server 1 and server 2 should be synchronized, and the data during the communication interrupt are recovered.

From example 1, it can be noted that the system is load balanced in normal operation, and the system can work properly even if a server is disconnected, and all the data will not be lost.

### Example 2: the condition that ECC between the network elements is disconnected.

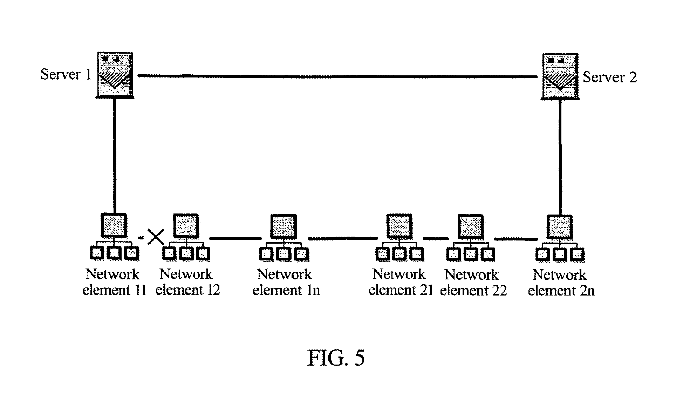

FIG. 5 illustrates the system when the ECC between network element 11 and network element 12 is disconnected, according to the technical scheme of the master/standby management method of the present invention, when the ECC between the network elements is disconnected, the master/standby management mainly includes the following steps:
(1) Connecting the network elements 11...1n...21...2n, and configuring bidirectional routes for the above network elements, configuring the authorities of server 1 and server 2 of the network elements, and configure the master server returning strategy as the mode of master server returning.
   Wherein, network elements 11-1n configure server 1 as the master server and server 2 as the standby server, while network elements 21-2n configure server 2 as the master server and server 1 as the standby server.
(2) Accessing server 1 and server 2 to the network elements, and in normal operation, server 1 works as the master server and server 2 works as the standby server to manage network elements 11...1n; server 2 work as the master server and server 1 works as the standby server to manage network elements 21...2n; date are synchronized between server 1 and server 2 to ensure that the data in the two servers are consistent and whole-amount.
(3) As shown in FIG. 5, when the ECC between network element 11 and network element 12 is disconnected and the communication mechanism of the network elements 12...2n detects that they are disconnected with server 1, the network elements 12...2n will notify server 2 to switch to be their master server, now server 2 works as the master server to manage some of the network elements in serial 1 and all the network elements in serial 2 and collects all the historical data, and server 1 only works as the master server to manage the other network elements in serial 1.
(4) When the ECC communication between network element 11 and network element 12 is recovered, since the returning strategy configured in the network element is the mode of master server returning, server 1 is switched to be the master server of the network elements 11...1n, while server 2 is switched back to be the standby server.

From example 2, it can be noted that the system is load balanced in normal operation, and the system can perform proper management when the ECC is disconnected, and all the data will not be lost.

The network element based master/standby management method in accordance with the present invention can guarantee that the master server and the standby server manage their own network elements, and load balancing can be achieved by reasonably assigning the number of network elements for a network manager which works as their master server; meanwhile, for the master and standby servers, since the accessed network elements are different, when an ECC disconnected, all the network elements can still be managed, thus the reliability of the system can be improved.

All the embodiments in the specification are typical examples which embody the idea of the present invention, they are not intended to exclude other embodiments which embody the design scheme of the present invention.

For example, in another embodiment, the access gateway network element of the server can be not the first one or the end one of the serially connected network elements. For instance, in FIG. 3, server 2 is accessed to network element 21, comparing with the case of accessing to network element 2n, this will result in that when the ECC between network element 21 and network element 22 is disconnected, network elements 22-2n will not be connected with either of server A and server B, thus the network management servers can not manage the network elements, therefore, the reliability of this connection is poor.

For another example, the load of two servers is not necessary totally balanced when distributing the network elements to be connected with the two servers. When assigning the network elements, two servers should share the load, but only should the load be shared to make the system go into the optimal condition according to the load condition in reality.

### Industrial Applicability

The distributed master/standby management method based on network element and the system thereof disclosed in the present invention is a dynamic network management protection mode in the network element based distributed master/standby management system, wherein, the two network management servers are equal and they are connected with different network elements, and have the corresponding master/standby server authorities for different network elements. Compared with the prior art, bidirectional routes are configured for the network elements, and the two servers are both accessed to the network elements; By properly assigning the number of network elements managed by the two network management servers working as the master server, it is to make the two servers share the load; when the network is abnormal, or the master network manager is abnormal, or the ECC of the network elements is disconnected, the standby server will replace the master server of the network element to manage part of the network or the whole network, thereby improving the reliability of the network management of the system.

## Claims

1. A master/standby management method for network elements, **characterized in that** the master/standby management for the network elements is distributed based on network elements, and the method comprises the following steps of:
(a) connecting all the network elements, configuring a route between the network elements to be bidirectional and configuring management authorities of a server A and a server B, wherein some of the network elements configure the server A as a master server and the server B as a standby server, while the other network elements configure the server B as the master server and the server A as the standby server;
(b) configuring a returning strategy for the master server in the two servers, interconnecting the two servers, each of which respectively connects to an access network element which configures the server as the master server, wherein, the two servers manage their network elements distributed to them respectively as the master server, and monitor the other network elements as standby server;
(c) if a communication between the network element and the server configured by the network element as the master server is disconnected, said network element performing switching operation, and another server configured by the network element as the standby server working as the master server to manage the network element;
(d) when the communication between the network element and the server configured by the network element as the master server is recovered, said server is resumed to be the master server to manage the network element according to the returning strategy;
wherein in said step (b), said returning strategy is configured as the mode of master server returning or the mode of master server non-returning,
if it is the mode of master server returning, in said step (d), when the communication between the network element and the server configured by the network element as the master server is recovered, the server configured by the network element as the master server is resumed to be the master server to manage said network element, and the present master server state is switched back to be the standby server state, meanwhile the resumed master server synchronizes the data during the disconnection period;
if it is the mode of master server non-returning, in said step (d), when the communication between the network element and the server configured by the network element as the master server is recovered, the server configured by the network element as the master server is resumed to be the standby server to manage said network element, to synchronize the data during the disconnection period, and to access the network element in the form of the master server when the present master server is disconnected.

2. The method of claim 1, wherein in said step (a), connecting all the network elements and configuring the route between the network elements to be bidirectional further comprises:
serially connecting all the network elements to make Embedded Control Channels of all the network elements connected;
configuring the routes of each the network element to be bidirectional.

3. The method of claim 1, wherein in said step (a), configuring the management authorities of the two servers among the network elements further comprises:
evenly dividing all the network elements into two parts according to a rule of equalized load of the two servers;
one part of the network elements configuring the server A as the master server and the server B as the standby server;
the other part of the network elements configuring the server B as the master server and the server A as the standby server.

4. The method of claim 1, wherein in step (b), when the server, as being the master server, manages the network element which configures the server as the master server, the server collects historical data of the network element, configures and inquires the network element correspondingly; when the server, as being the standby server, manages the network element which configures the server as the master server, the server inquires and monitors the network element.

5. The method of claim 1, wherein in said step (b), the data is synchronized between the configured master server and the configured standby server in operation through database synchronization, and both the master server and the standby server store all the historical data.

6. The method of claim 1, wherein said step (c) comprises:
when a network element detects that the communication between the network element and the server configured by the network element as the master server is disconnected, the network element notifies the server configured by the network element as the standby server to work as the master server to manage this network element; or
when the server configured by the network element as the standby server detects that the server configured by the network element as the master server is abnormal, said standby server actively asks the network element for the authorities of the master server, and the network element determines whether to switch the standby server to the master server based on the state of the present master server.

7. The method of claim 2, wherein in step (b), said two servers, that is, the server A and the server B, connect to a first network element and an end network element in the serial network elements, respectively.

8. A master/standby management system, including a plurality of network elements and a server A and a server B for managing the network elements, **characterized in that** the master/standby management for the network elements is distributed based on network elements, wherein:
all the network elements arc connected with each other, with bidirectional routes configuration, management authorities of the server A and the server B are configured in each network element, wherein some network elements are arranged to configure the server A as a master server and the server B as a standby server, while the others are arranged to configure the server A as the standby server and the server B as the master server;
when the communication between the network element and the server configured by the network element as the master server is disconnected, said network element is arranged to perform switching to make the server configured by the network element as the standby server be the master server; and when the communication between the network element and the server configured by the network element as the master server is recovered, said network element is arranged to switch the server states back according to a returning strategy;
the two servers are connected with each other and are configured with the master server returning strategy, and each server is respectively connected to an access network element which configures the server as the master server, and in operation, the server, as being the master server, is arranged to manage the network elements distributed, and as being the standby server, to monitor the other part of the network elements;
when the two servers receive a notification of network element switching as the communication is disconnected, the states of the two servers with respect to the network element are switched, and after the communication between the server and the network element which configures the server as the master server is recovered, the server is arranged to resume the management for the network element according to the returning strategy;
wherein the returning strategy for the server being the master server is configured as the mode of master server returning or the mode of master server non-returning
if it is the master server returning mode, when the communication between the network element and the server configured by the network element as the master server is recovered, the server configured by the network element as the master server is resumed as the master server to manage the network element, and the present master server state is switched back to be the standby server state, and the data during the disconnection period are synchronized by the resumed master server;
if it is the master server non-returning mode, when the communication between the network element and the server configured by the network element as the master server is recovered, the server configured by the network element as the master server is resumed as the standby server to manage the network element, to synchronize the data during the disconnection, and to access the network element as the master server when the present master server is disconnected.

9. The system of claim 8, wherein when said server, as being the master server, manages the network element which configures the server as the master server, the server is arranged to collect historical data of the network element and correspondingly configure and inquire said network element; and when said server, as being the standby server, manages the network element which configures the server as the standby server, the server is arranged to inquire and monitor said network clement.

10. The system of claim 8, wherein when said two servers are configured as the master server and the standby server of the network element to work properly, data are synchronized in the two servers through database synchronization, wherein, both the master server and the standby server are arranged to store all the historical data.

11. The system of claim 8, wherein when the network element detects that the communication between said network element and the server configured by the network element as the master server is disconnected, the network element is arranged to notify the server configured by the network element as the standby server to work as the master server to manage the network element; or when the server configured by the network element as the standby server detects that the server configured by the network element as the master server works abnormally, said standby server is arranged to actively ask the network element for the authority of being the master server, and the network element is arranged to determine whether to switch the standby server to the master server to manage the network element according to the state of the present master server.

12. The system of claim 8, wherein all the network elements are serially connected with each other and connected to the two servers, that is, server A and server B, respectively through a first network element and an end network element.

13. The system of claim 8, wherein when each of the two servers working as the master server manages said network elements, the number of the network elements which configure the server as the master server is half of the total number and the two servers are arranged to manage the corresponding network elements according to a rule of equalized load.

## Patentansprüche

1. Master-/Standby-Verwaltungsverfahren für Netzwerkelemente, **dadurch gekennzeichnet, dass** die Master-/Standby-Verwaltung für die Netzwerkelemente auf Basis der Netzwerkelemente verteilt ist und das Verfahren folgende Schritte aufweist:
(a) Verbinden aller Netzwerkelemente, Konfigurieren einer Route zwischen den Netzwerkelementen als bidirektional und Konfigurieren von Verwaltungsbefugnissen eines Servers A und eines Servers B, wobei einige der Netzwerkelemente den Server A als einen Master-Server und den Server B als einen Standby-Server konfigurieren, während die anderen Netzwerkelemente den Server B als den Master-Server und den Server A als den Standby-Server konfigurieren;
(b) Konfigurieren einer Rückkehrstrategie für den Master-Server in den zwei Servern, Verbinden der zwei Server miteinander, von denen jeder jeweils mit einem Zugangs-Netzwerkelement verbunden wird, das den Server als den Master-Server konfiguriert, wobei die beiden Server ihre ihnen zugeteilten Netzwerkelemente jeweils als der Master-Server verwalten und die anderen Netzwerkelemente als Standby-Server überwachen;
(c) falls eine Kommunikation zwischen dem Netzwerkelement und dem vom Netzwerkelement als der Master-Server konfigurierten Server unterbrochen wird, führt das Netzwerkelement den Umschaltvorgang durch, und ein anderer vom Netzwerkelement als der Standby-Server konfigurierter Server arbeitet als der Master-Server, um das Netzwerkelement zu verwalten;
(d) wenn die Kommunikation zwischen dem Netzwerkelement und dem vom Netzwerkelement als der Master-Server konfigurierten Server wieder hergestellt ist, fährt der Server wieder fort, der Master-Server zu sein, um das Netzwerkelement gemäß der Rückkehrstrategie zu verwalten;
wobei in Schritt (b) die Rückkehrstrategie als der Modus des Rückkehrens des Master-Servers oder der Modus des Nicht-Rückkehrens des Master-Servers konfiguriert ist,
falls es sich in Schritt (d) um den Modus des Rückkehrens des Master-Servers handelt, wenn die Kommunikation zwischen dem Netzwerkelement und dem vom Netzwerkelement als der Master-Server konfigurierten Server wieder hergestellt ist,
fährt der vom Netzwerkelement als der Master-Server konfigurierte Server wieder fort, der Master-Server zu sein, um das Netzwerkelement zu verwalten, und der gegenwärtige Serverstatus wird zurück in den Standby-Serverstatus umgeschaltet, während der wieder fortfahrende Master-Server die Daten während der Unterbrechungsperiode synchronisiert; falls es sich in Schritt (d) um den Modus des Nicht-Rückkehrens des Master-Servers handelt, wenn die Kommunikation zwischen dem Netzwerkelement und dem vom Netzwerkelement als der Master-Server konfigurierten Server wieder hergestellt ist, fährt der vom Netzwerkelement als der Master-Server konfigurierte Server wieder fort, der Standby-Server zu sein, um das Netzwerkelement zu verwalten, die Daten während der Unterbrechungsperiode zu synchronisieren und auf das Netzwerkelement in der Form des Master-Servers zuzugreifen, wenn der gegenwärtige Master-Server abgeschaltet ist.

2. Verfahren nach Anspruch 1, wobei in Schritt (a) das Verbinden aller Netzwerkelemente und Konfigurieren der Route zwischen den Netzwerkelementen als bidirektional ferner Folgendes aufweist:
serielles Verbinden aller Netzwerkelemente zur Bildung von Embedded Control Channels von allen angeschlossenen Netzwerkelementen;
Konfigurieren der Routen jedes Netzwerkelements als bidirektional.

3. Verfahren nach Anspruch 1, wobei in Schritt (a) das Konfigurieren der Verwaltungsbefugnisse der zwei Server unter den Netzwerkelementen ferner Folgendes aufweist:
gleichmäßiges Aufteilen aller Netzwerkelemente in zwei Teile gemäß einer Regel über ausgeglichene Belastung der zwei Server;
ein Teil der Netzwerkelemente konfiguriert den Server A als den Master-Server und den Server B als den Standby-Server;
der andere Teil der Netzwerkelemente konfiguriert den Server B als den Master-Server und den Server A als den Standby-Server.

4. Verfahren nach Anspruch 1, wobei in Schritt (b), wenn der Server, wenn er der Master-Server ist, das Netzwerkelement verwaltet, das den Server als den Master-Server konfiguriert, wobei der Server historische Daten des Netzwerkelements sammelt, das Netzwerkelement entsprechend konfiguriert und abfragt; wenn der Server, wenn er der Standby-Server ist, das Netzwerkelement verwaltet, das den Server als den Master-Server konfiguriert, fragt der Server das Netzwerkelement ab und überwacht es.

5. Verfahren nach Anspruch 1, wobei in Schritt (b) die Daten zwischen dem konfigurierten Master-Server und dem konfigurierten Standby-Server im Betrieb durch die Datenbanksynchronisierung synchronisiert werden und sowohl der Master-Server als auch der Standby-Server alle historischen Daten speichern.

6. Verfahren nach Anspruch 1, wobei Schritt (c) Folgendes aufweist:
wenn ein Netzwerkelement erkennt, dass die Kommunikation zwischen dem Netzwerkelement und dem vom Netzwerkelement als der Master-Server konfigurierten Server unterbrochen ist, benachrichtigt das Netzwerkelement den vom Netzwerkelement als der Standby-Server konfigurierten Server, dass dieser als der Master-Server arbeitet, um dieses Netzwerkelement zu verwalten; oder
wenn der vom Netzwerkelement als der Standby-Server konfigurierte Server erkennt, dass der vom Netzwerkelement als der Master-Server konfigurierte Server unnormal ist, fragt der Standby-Server das Netzwerkelement aktiv um die Befugnisse des Master-Servers, und das Netzwerkelement bestimmt auf Basis des Zustands des gegenwärtigen Master-Servers, über ein Umschalten des Standby-Servers auf den Master-Server.

7. Verfahren nach Anspruch 2, wobei in Schritt (b) die zwei Server, das heißt der Server A und der Server B, mit einem ersten Netzwerkelement beziehungsweise einem abschließenden Netzwerkelement in den seriellen Netzwerkelementen verbunden werden.

8. Master-/Standby-Verwaltungssystem, aufweisend mehrere Netzwerkelemente und einen Server A und einen Server B zum Verwalten der Netzwerkelemente, **dadurch gekennzeichnet, dass** die Master-/Standby-Verwaltung für die Netzwerkelemente auf Basis der Netzwerkelemente verteilt ist, wobei:
alle Netzwerkelemente in Bidirektional-Routen-Konfiguration miteinander verbunden sind, Verwaltungsbefugnisse des Servers A und des Servers B in jedem Netzwerkelement konfiguriert sind, wobei einige Netzwerkelemente für ein Konfigurieren des Servers A als einen Master-Server und des Servers B als einen Standby-Server angeordnet sind, während die anderen für ein Konfigurieren des Servers A als den Standby-Server und des Servers B als den Master-Server angeordnet sind;
wenn die Kommunikation zwischen dem Netzwerkelement und dem vom Netzwerkelement als Master-Server konfigurierten Server unterbrochen wird, ist das Netzwerkelement zum Durchführen eines Umschaltens angeordnet, um den vom Netzwerkelement als der Standby-Server konfigurierten Server zum Master-Server zu machen; und wenn die Kommunikation zwischen dem Netzwerkelement und dem vom Netzwerkelement als der Master-Server konfigurierten Server wieder hergestellt ist, ist das Netzwerkelement zum Umschalten der Serverzustände zurück gemäß einer Rückkehrstrategie angeordnet;
die beiden Server miteinander verbunden und mit der Rückkehrstrategie des Master-Servers konfiguriert sind, und jeder Server jeweils mit einem Zugangs-Netzwerkelement verbinden wird, das den Server als den Master-Server konfiguriert, und in Betrieb ist der Server, wenn er der Master-Server ist, für ein Verwalten der verteilten Netzwerkelemente angeordnet, und wenn er der Standby-Server ist, zum Überwachen des anderen Teils der Netzwerkelemente angeordnet;
wenn die zwei Server eine Benachrichtigung über ein Netzwerkelement-Umschalten empfangen, weil die Kommunikation unterbrochen ist, werden die Zustände der zwei Server in Bezug auf das Netzwerkelement umgeschaltet, und nachdem die Kommunikation zwischen dem Server und dem Netzwerkelement, das den Server als den Master-Server konfiguriert, wieder hergestellt ist, ist der Server für eine Wiederaufnahme der Verwaltung für das Netzwerkelement gemäß der Rückkehrstrategie angeordnet;
wobei die Rückkehrstrategie für den Server, der der Master-Server ist, als der Master-Server-Rückkehr-Modus oder Master-Server-Nicht-Rückkehr-Modus konfiguriert ist,
falls der Master-Server-Rückkehr-Modus vorliegt, wenn die Kommunikation zwischen dem Netzwerkelement und dem vom Netzwerkelement als der Master-Server konfigurierten Server wieder hergestellt ist, fährt der vom Netzwerkelement als der Master-Sever konfigurierte Server wieder fort, der Master-Server zu sein, um das Netzwerkelement zu verwalten, und der gegenwärtige Master-Serverstatus wird zurück in den Standby-Serverstatus umgeschaltet, und die Daten während der Unterbrechungsperiode werden vom wieder fortfahrenden Master-Server synchronisiert;
falls der Master-Server-Nicht-Rückkehr-Modus vorliegt, wenn die Kommunikation zwischen dem Netzwerkelement und dem vom Netzwerkelement als der Master-Server konfigurierten Server wieder hergestellt ist, fährt der vom Netzwerkelement als der Master-Server konfigurierte Server wieder fort, der Standby-Server zu sein, das Netzwerkelement zu verwalten, die Daten während der Unterbrechung zu synchronisieren und auf das Netzwerkelement als den Master-Server zuzugreifen, wenn der gegenwärtige Master-Server abgeschaltet wird.

9. System nach Anspruch 8, wobei der Server, wenn er der Master-Server ist, das Netzwerkelement, das den Server als den Master-Server konfiguriert, verwaltet, wobei der Server zum Sammeln historischer Daten des Netzwerkelements und entsprechendem Konfigurieren und Abfragen des Netzwerkelements angeordnet ist; und wenn der Server, wenn er der Standby-Server ist, das Netzwerkelement verwaltet, das den Server als den Standby-Server konfiguriert, ist der Server für ein Abfragen und Überwachen des Netzwerkelements angeordnet.

10. System nach Anspruch 8, wobei, wenn die zwei Server als der Master-Server und der Standby-Server des Netzwerks für einwandfreie Funktion konfiguriert sind, Daten in den zwei Servern durch Datenbanksynchronisierung synchronisiert werden, wobei sowohl der Master-Server als auch der Standby-Server für ein Speichern aller historischen Daten angeordnet sind.

11. System nach Anspruch 8, wobei, wenn das Netzwerkelement erkennt, dass die Kommunikation zwischen den Netzwerkelement und dem vom Netzwerkelement als der Master-Server konfigurierten Server unterbrochen ist, das Netzwerkelement für ein Benachrichtigen des vom Netzwerkelement als der Standby-Server konfigurierten Servers für einen Betrieb als der Master-Server zum Verwalten des Netzwerkelements angeordnet ist; oder, wenn der vom Netzwerkelement als der Standby-Server konfigurierte Server erkennt, dass der vom Netzwerkelement als der Master-Server konfigurierte Server unnormal arbeitet, der Standby-Server angeordnet ist, das Netzwerkelement aktiv um die Befugnis zu fragen, der Master-Server zu sein, und das Netzwerkelement angeordnet ist für ein Bestimmen, ob der Standby-Server auf den Master-Server umgeschaltet werden soll, um das Netzwerkelement gemäß dem Zustand des gegenwärtigen Master-Servers zu verwalten.

12. System nach Anspruch 8, wobei alle Netzwerkelemente seriell miteinander verbunden sind und mit den zwei Servern, das heißt Server A und Server B, mit einem ersten Netzwerkelement beziehungsweise einem abschließenden Netzwerkelement verbunden werden.

13. System nach Anspruch 8, wobei, wenn jeder der zwei Server, die als der Master-Server arbeiten, die Netzwerkelemente verwaltet, die Anzahl der Netzwerkelemente, die den Server als den Master-Server konfigurieren, die Hälfte der Gesamtanzahl beträgt, und die beiden Server für ein Verwalten der entsprechenden Netzwerkelemente gemäß einer Regel über ausgeglichene Belastung angeordnet sind.

## Revendications

1. Procédé de gestion maître/réserve d'éléments de réseau, **caractérisé en ce que** la gestion maître/réserve des éléments de réseau est répartie en fonction des éléments de réseau, et le procédé comprenant les étapes suivantes consistant à :
(a) connecter tous les éléments de réseau, en configurant une route bidirectionnelle entre les éléments de réseau et en configurant des autorisations de gestion d'un serveur A et d'un serveur B, dans lequel certains des éléments de réseau configurent le serveur A comme serveur maître et le serveur de B comme serveur de réserve, tandis que les autres éléments de réseau configurent le serveur B comme serveur maître et le serveur A comme serveur de réserve ;
(b) la configuration d'une stratégie de retour pour le serveur maître dans les deux serveurs, en interconnectant les deux serveurs, lesquels se connectent chacun à un élément de réseau d'accès qui configure le serveur comme serveur maître, les deux serveurs gérant leurs éléments de réseau qui leur ont été distribués respectivement comme serveur maître, et surveillant les autres éléments de réseau comme serveur de réserve ;
(c) si une communication entre l'élément de réseau et le serveur configuré par l'élément de réseau comme serveur maître est déconnectée, l'exécution par ledit élément de réseau d'une opération de commutation, et le fonctionnement d'un autre serveur configuré par l'élément de réseau comme serveur de réserve comme serveur maître pour gérer l'élément de réseau ;
(d) quand la communication entre l'élément de réseau et le serveur configuré par l'élément de réseau comme serveur maître est rétablie, la reprise du serveur en tant que serveur maître afin de gérer l'élément de réseau selon la stratégie de retour ;
dans lequel à ladite étape (b), ladite stratégie de retour est configurée comme mode de retour du serveur maître ou mode de non-retour du serveur maître,
dans le mode de retour du serveur maître, à ladite étape (d), quand la communication entre l'élément de réseau et le serveur configuré par l'élément de réseau comme serveur maître est rétablie, le serveur configuré par l'élément de réseau comme serveur maître reprend comme serveur maître pour gérer ledit élément de réseau, et l'état courant du serveur maître est commuté de nouveau sur l'état de serveur de réserve, tandis que le serveur maître ayant repris synchronise les données durant la période de déconnexion ;
dans le mode de non-retour du serveur maître, à ladite étape (d), quand la communication entre l'élément de réseau et le serveur configuré par l'élément de réseau comme serveur maître est rétablie, le serveur configuré par l'élément de réseau comme serveur maître reprend comme serveur de réserve pour gérer ledit élément de réseau afin de synchroniser les données durant la période de déconnexion, et solliciter l'élément de réseau en tant que serveur maître quand le serveur maître courant est déconnecté.

2. Procédé selon la revendication 1, dans lequel à ladite étape (a), la connexion de tous les éléments de réseau et la configuration de la route bidirectionnelle entre les éléments de réseau comprennent en *outre :
la connexion sérielle de tous les éléments de réseau pour constituer des Canaux de Commande Intégrés de tous les éléments de réseau connectés ;
la configuration des routes bidirectionnelles de chacun des éléments de réseau.

3. Procédé selon la revendication 1, dans lequel à ladite étape (a), la configuration des autorisations de gestion des deux serveurs entre les éléments de réseau comprend en outre :
la division égale de tous les éléments de réseau en deux parties d'après une règle de charge égalisée des deux serveurs ;
une partie des éléments de réseau configurant le serveur A comme serveur maître et le serveur B comme serveur de réserve ;
l'autre partie des éléments de réseau configurant le serveur B comme serveur maître et le serveur A comme serveur de réserve.

4. Procédé selon la revendication 1, dans lequel à l'étape (b), quand le serveur, en qualité de serveur maître, gère l'élément de réseau qui configure le serveur comme serveur maître, le serveur collecte des données historiques de l'élément de réseau, configure et interroge l'élément de réseau en conséquence ; quand le serveur, en qualité de serveur de réserve, gère l'élément de réseau qui configure le serveur comme serveur maître, le serveur interroge et surveille l'élément de réseau.

5. Procédé selon la revendication 1, dans lequel à ladite étape (b), les données sont synchronisées entre le serveur maître configuré et le serveur de réserve configuré en service par une synchronisation de base de données, et à la fois le serveur maître et le serveur de réserve mémorisent toutes les données historiques.

6. Procédé selon la revendication 1, dans lequel ladite étape (c) comprend :
quand un élément de réseau détecte que la communication entre l'élément de réseau et le serveur configuré par l'élément de réseau comme serveur maître est déconnectée, la notification par l'élément de réseau au serveur configuré par l'élément de réseau comme serveur de réserve qu'il doit fonctionner comme serveur maître pour gérer cet élément de réseau ; ou
quand le serveur configuré par l'élément de réseau comme serveur de réserve détecte que le serveur configuré par l'élément de réseau comme serveur maître est anormal, la demande active par ledit serveur de réserve à l'élément de réseau des autorisatons du serveur maître, et la détermination par l'élément de réseau qu'il convient ou non de commuter le serveur de réserve en tant que serveur maître en fonction de l'état du serveur maître courant.

7. Procédé selon la revendication 2, dans lequel à l'étape (b), lesdits deux serveurs, à savoir, le serveur A et le serveur B, se connectent respectivement à un premier élément de réseau et à un dernier élément de réseau dans les éléments de réseau sériels.

8. Système de gestion maître/réserve, comportant une pluralité d'éléments de réseau et un serveur A et un serveur B pour gérer les éléments de réseau, **caractérisé en ce que** la gestion maître/réserve des éléments de réseau est répartie en fonction des éléments de réseau, dans lequel :
tous les éléments de réseau sont connectés les uns aux autres, avec des configurations de routes bidirectionnelles, des autorisations de gestion du serveur A et du serveur B sont configurées dans chaque élément de réseau, dans lequel certains éléments de réseau sont agencés pour configurer le serveur A comme serveur maître et le serveur de B comme serveur de réserve, tandis que les autres sont agencés pour configurer le serveur A comme serveur de réserve et le serveur B comme serveur maître ;
quand la communication entre l'élément de réseau et le serveur configuré par l'élément de réseau comme serveur maître est déconnectée, ledit élément de réseau est agencé pour exécuter une commutation qui établit le serveur configuré par l'élément de réseau comme serveur de réserve en tant que serveur maître ; et quand la communication entre l'élément de réseau et le serveur configuré par l'élément de réseau est rétablie, ledit élément de réseau est agencé pour commuter de nouveau le serveur à son état antérieur selon une stratégie de retour ;
les deux serveurs sont connectés l'un à l'autre et sont configurés selon la stratégie de retour du serveur maître, et chaque serveur est connecté respectivement à un élément de réseau d'accès qui configure le serveur comme serveur maître, et en service, le serveur, en tant que serveur maître, est agencé pour gérer les éléments de réseau répartis, et en tant que serveur de réserve, surveiller l'autre partie des éléments de réseau ;
quand les deux serveurs reçoivent une notification de commutation par un élément de réseau quand la communication est déconnectée, les états des deux serveurs relativement à l'élément de réseau sont commutés, et après le rétablissement de la communication entre le serveur et l'élément de réseau qui configure le serveur comme serveur maître, le serveur est agencé pour reprendre la gestion de l'élément de réseau selon la stratégie de retour ;
dans lequel la stratégie de retour du serveur faisant fonction de serveur maître est configurée comme mode de retour du serveur maître ou mode de non-retour du serveur maître,
dans le mode de retour du serveur maître, quand la communication entre l'élément de réseau et le serveur configuré par l'élément de réseau comme serveur maître est rétablie, le serveur configuré par l'élément de réseau comme serveur maître reprend comme serveur maître pour gérer ledit élément de réseau, et l'état courant du serveur maître est commuté de nouveau sur l'état de serveur de réserve, et les données durant la période de déconnexion sont synchronisées par le serveur maître ayant repris ;
dans le mode de non-retour du serveur maître, quand la communication entre l'élément de réseau et le serveur configuré par l'élément de réseau comme serveur maître est rétablie, le serveur configuré par l'élément de réseau comme serveur maître reprend comme serveur de réserve pour gérer l'élément de réseau, synchroniser les données durant la déconnexion, et solliciter l'élément de réseau en tant que serveur maître quand le serveur maître courant est déconnecté.

9. Système selon la revendication 8, dans lequel quand ledit serveur, en qualité de serveur maître, gère l'élément de réseau qui configure le serveur comme serveur maître, le serveur est agencé pour collecter des données historiques de l'élément de réseau et configurer et interroger en conséquence ledit élément de réseau ; quand ledit serveur, en qualité de serveur de réserve, gère l'élément de réseau qui configure le serveur comme serveur de réserve, le serveur est agencé pour interroger et surveiller ledit élément de réseau.

10. Système selon la revendication 8, dans lequel quand lesdits deux serveurs sont configurés comme serveur maître et serveur de réserve de l'élément de réseau pour fonctionner correctement, les données sont synchronisées dans les deux serveurs par une synchronisation de base de données, et à la fois le serveur maître et le serveur de réserve sont agencés pour mémoriser toutes les données historiques.

11. Système selon la revendication 8, dans lequel quand l'élément de réseau détecte que la communication entre ledit élément de réseau et le serveur configuré par l'élément de réseau comme serveur maître est déconnectée, l'élément de réseau est agencé pour notifier au serveur configuré par l'élément de réseau comme serveur de réserve qu'il doit fonctionner comme serveur maître pour gérer l'élément de réseau ; ou quand le serveur configuré par l'élément de réseau comme serveur de réserve détecte que le serveur configuré par l'élément de réseau comme serveur maître ne fonctionne pas correctement, ledit serveur de réserve est agencé pour demander activement à l'élément de réseau l'autorisation de servir de serveur maître, et l'élément de réseau est agencé pour déterminer qu'il convient ou non de commuter le serveur de réserve en tant que serveur maître pour gérer l'élément de réseau en fonction de l'état du serveur maître courant.

12. Système selon la revendication 8, dans lequel tous les éléments de réseau sont connectés sériellement les uns aux autres et connectés aux deux serveurs, à savoir le serveur A et le serveur B par le biais d'un premier élément de réseau et d'un dernier élément de réseau.

13. Système selon la revendication 8, dans lequel quand chacun des deux serveurs fonctionnant comme serveur maître gère lesdits éléments de réseau, le nombre des éléments de réseau qui configurent le serveur comme serveur maître est la moitié du nombre total et les deux serveurs sont agencés pour gérer les éléments de réseau correspondants en fonction d'une règle de charge égalisée.
